# EUROPÄISCHE PATENTSCHRIFT

(11) **EP 1 156 148 B1**
(45) Veröffentlichungstag und Bekanntmachung des Hinweises auf die Patenterteilung: **07.11.2007**
(21) Anmeldenummer: 01108992.7
(22) Anmeldetag: 11.04.2001
(51) Int. Cl.: D05B 19/04, H04M 11/00, G05B 19/042

(54) **Einrichtung zur Daten-Kommunikation zwischen einer Nähmaschine und einem Zentralrechner**
Device for communicating data between a sewing machine and a central computer
Dispositif pour la communication de données entre une machine à coudre et un ordinateur central

(30) Priorität: 17.05.2000 DE 10024322
(43) Veröffentlichungstag der Anmeldung: 21.11.2001
(73) Patentinhaber: DÜRKOPP ADLER AKTIENGESELLSCHAFT, 33617 Bielefeld (DE)
(72) Erfinder: Meyer, Bernd, 33106 Paderborn (DE); Cramer, Andree, 32758 Detmold (DE); Kres, Ralf, 33613 Bielefeld (DE)
(74) Vertreter: Rau, Manfred

(56) Entgegenhaltungen:
- DE-A- 19 753 345
- DE-C- 19 501 177
- US-A- 5 144 900
- PATENT ABSTRACTS OF JAPAN vol. 1995, no. 11, 26. Dezember 1995 (1995-12-26) & JP 07 194880 A (TOKAI IND SEWING MACH CO LTD), 1. August 1995 (1995-08-01)
- PATENT ABSTRACTS OF JAPAN vol. 1999, no. 08, 30. Juni 1999 (1999-06-30) & JP 11 076663 A (BROTHER IND LTD), 23. März 1999 (1999-03-23)

## Beschreibung

Die Erfindung betrifft eine Einrichtung zur Daten-Kommunikation zwischen einer Nähmaschine und einem Zentralrechner.

Eine derartige Einrichtung ist aus der JP-A-07 194 880 bekannt. Dort können Nähdaten zwischen einem Zentralrechner und einer Mehrzahl von Nähmaschinen übertragen werden, wobei jeder der Nähmaschinen eine eigene Nähmaschinen-Steuerung sowie ein Steuerrechner zugeordnet ist.

Eine weitere Einrichtung zur Daten-Kommunikation zwischen einer Nähmaschine und einem räumlich entfernt zu dieser angeordneten Zentralrechner ist aus der DE 195 01 177 C1 (entsprechend US 5,662,055) bekannt. Bei dieser bekannten Einrichtung werden Nähdaten oder Stickmuster-Daten von einem ortsfremden, also entfernten, Zentralrechner auf die Nähmaschinen-Steuerung übertragen. Diese bekannte Einrichtung ermöglicht eine Übertragung von Daten, die das von der Näh- oder Stickmaschine auszuführende Programm betreffen. Nachteilig ist, daß es nicht möglich ist, eine Aktualisierung oder gar eine vollständige Übertragung eines Betriebsprogramms nach einem Austausch der Steuerung auszuführen.

Aus der DE 197 53 345 A1 ist es bekannt, bei einer Haushaltsmaschine, beispielsweise einer Waschmaschine, Gerätedaten und Daten von Fehlerzuständen mittels eines entfernt davon befindlichen PC abzurufen. Ein Eingriff in den Betrieb der Haushaltsmaschine mittels des entfernt befindlichen PC ist nicht möglich.

Der Erfindung liegt die Aufgabe zugrunde, eine Einrichtung zur Daten-Kommunikation zwischen einer Nähmaschine und einem Zentralrechner so auszugestalten, daß zwischen der Nähmaschinen-Steuerung und dem Zentralrechner ein Datendialog hinsichtlich der Nähdaten und hinsichtlich der Betriebsprogramm-Daten möglich ist.

Diese Aufgabe wird erfindungsgemäß durch die Merkmale im Kennzeichnungsteil des Anspruches 1 gelöst. Wesentlich ist, daß eine bidirektionale Kommunikation zwischen der Nähmaschinen-Steuerung und dem Zentralrechner möglich ist und daß dieser Datendialog auf der Seite der Nähmaschine nicht direkt mit der Nähmaschinen-Steuerung, sondern einem gesonderten, vom Zustand der Nähmaschinen-Steuerung unabhängigen Steuerungs-Rechner erfolgt. Dadurch ist es möglich, vom Zentralrechner her das Betriebsprogramm der Nähmaschinen-Steuerung neu zu laden oder zu ändern, weil die Ansteuerung der Nähmaschinen-Steuerung von dem Steuerungs-Rechner erfolgt, mittels dessen die Daten-Kommunikation mit dem Zentralrechner erfolgt. Weiterhin können auf diesem Wege naturgemäß auch Nähdaten übertragen werden. Außerdem ist es möglich, die Bedienung der Nähmaschine über deren Nähmaschinen-Steuerung vom Service-Mann zu Testzwecken vom Zentralrechner aus durchzuführen.

Die Ausgestaltung nach Anspruch 2 führt zu einer erheblichen Vereinfachung im Aufbau und in der Bedienung:

Mit dem Merkmal von Anspruch 3 wird eine besonders komfortable Fernbedienung von Datenübertragung erreicht.

Die weitere Ausgestaltung nach Anspruch 4 ermöglicht eine Abfrage der Nähmaschinen-Funktionen und deren Sichtbarmachung auf einem Bildschirm beim Zentralrechner, so daß der Service-Mann selber überprüfen kann, ob die von ihm über sein zweites Bedien-Terminal ausgelösten Funktionen tatsächlich auch ausgeführt worden sind. In gleicher Weise kann er die erwähnten Funktionen abfragen und sichtbar machen, wenn sie über das erste Bedien-Terminal von der Näherin ausgelöst worden sind.

Eine besonders einfache Eingabe von Betriebsprogramm-Daten oder von Nähdaten einerseits und zur Datenfern-Übertragung solcher Daten andererseits ergibt sich aus Anspruch 5.

Die weitere Ausbildung nach Anspruch 6 ermöglicht es in einfacher Weise, die Betriebsprogramm-Daten für eine größere Zahl unterschiedlicher Nähmaschinen und spezifische Nähdaten in den Zentralrechner einzugeben.

Die Merkmale nach Anspruch 7 führen zu einer besonders kostengünstigen Ausgestaltung der Einrichtung zur Datenfernübertragung.

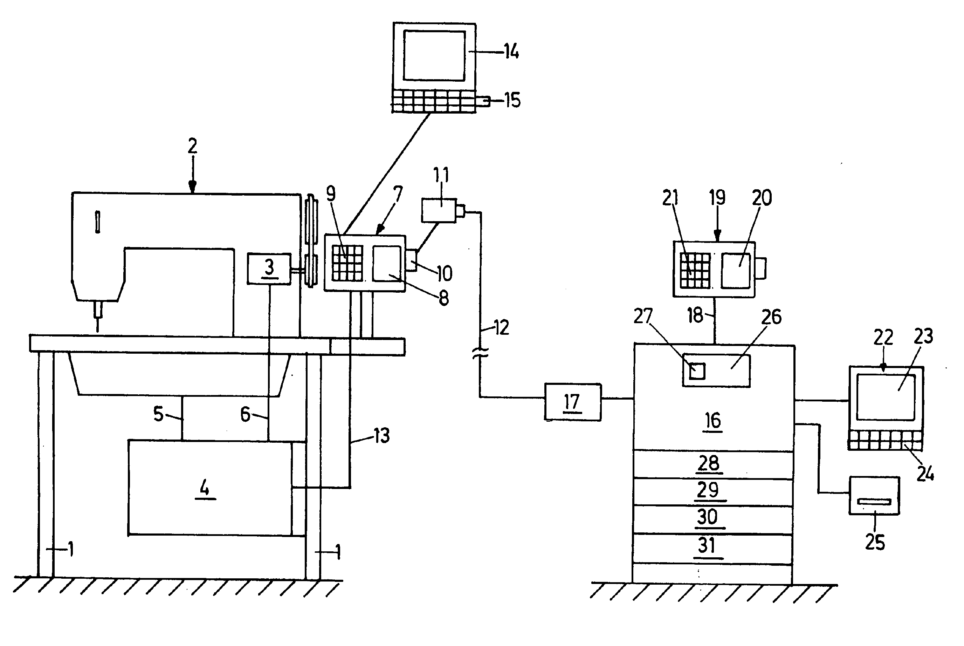

Ein Ausführungsbeispiel der Erfindung wird nachfolgend anhand der Zeichnung näher erläutert, die in schematischer Darstellung eine Nähanlage und einen entfernten Zentralrechner zeigt.

Die in der Zeichnung dargestellte Nähanlage weist eine auf einem Gestell 1 angebrachte Nähmaschine 2 auf, die von einem Antriebsmotor 3 antreibbar ist. Am Gestell 1 ist eine Nähmaschinen-Steuerung 4 angebracht, die einen Rechner enthält. Die Nähmaschine 2 und der Antriebsmotor 3 sind mit der Steuerung 4 über Steuerleitungen 5, 6 verbunden. Die Steuerleitung 5 symbolisiert beispielsweise die Ansteuerung von Magnetventilen, über die Pneumatikzylinder betätigt werden.

Auf dem Gestell 1 ist ein erstes Bedien-Terminal 7 angeordnet, das einen Bildschirm 8 und ein Eingabe-Tastenfeld 9 aufweist. Es weist weiterhin in seinem Inneren einen Steuerungs-Rechner auf und ist mit einer Eingabe-Einheit 10 in Form eines sogenannten Slots versehen, in die eine RAM-Karte zur Eingabe von Betriebsprogramm-Daten bzw. spezifischen Nähdaten eingesteckt werden kann. Alternativ kann in den Slot auch eine Steckkarte für eine Datenfern-Übertragung, beispielsweise ein Steckkarten-Modem 11 eingesteckt werden. Hier ist also eine Schnittstelle. Diese Datenfern-Übertragung kann über eine Daten-Fernleitung 12, beispielsweise eine Telefon-Leitung, über das Mobilfunknetz oder in anderer geeigneter Weise erfolgen. Das erste Bedien-Terminal 7 ist mit der Steuerung 4 mittels einer Datenleitung 13 verbunden. Als Alternative zum ersten Bedien-Terminal 7 kann ein normaler Personal-Computer 14 mit einer entsprechenden Eingabe-Einheit 15 vorgesehen sein, über die das Modem 11 anschließbar ist.

Entfernt von der Nähanlage, gleichsam am anderen Ende der Daten-Fernleitung 12, ist ein Zentralrechner 16, beispielsweise in Form eines PC vorgesehen, der über ein Modem 17 an die Datenfern-Übertragung, beispielsweise also die Fernleitung 12, angeschlossen ist. Mit dem Zentralrechner 16 ist wiederum über eine Datenleitung 18 ein zweites Bedien-Terminal 19 verbunden, das in gleicher Weise aufgebaut und ausgerüstet ist wie das erste Bedien-Terminal 7. Es weist also auch einen Bildschirm 20 und ein Eingabe-Tastenfeld 21 auf. Weiterhin ist mit dem Zentralrechner 16 ein drittes Bedien-Terminal 22 mit einem Bildschirm 23 und einem Eingabe-Tastenfeld 24 verbunden. Anstelle der Eingabe-Tastenfelder 9, 21, 24 können selbstverständlich die Eingabe-Tasten auch auf dem jeweiligen Bildschirm 8, 20, 23 abgebildet werden, so daß eine Eingabe über einen sogenannten Touch-Screen möglich ist. An den Zentralrechner 16 kann weiterhin ein RAM-Karten-Laufwerk 25 angeschlossen sein. Im Zentralrechner 16 ist ein Programm 26 zur Daten-Sichtbarmachung gespeichert. Im besonderen betrifft die Daten-Sichtbarmachung die Darstellung eines Erscheinungsbildes des ersten Bedien-Terminals 7 unterschiedlicher Nähmaschinen-Typen, was durch einen Programm-Teil 27 des Programms 26 erfolgt. Darüber hinaus wird ebenso der Inhalt des Bildschirms 8 auf dem Bildschirm 20 oder Bildschirm 23 dargestellt. Des weiteren können Betriebsprogramm-Daten 28, 29, 30, 31 für unterschiedliche Nähmaschinen-Typen gespeichert sein, also die Steuerprogramme, von denen jeweils eines in der Nähmaschinen-Steuerung 4 einer bestimmten Nähmaschine gespeichert ist und zur Steuerung der jeweiligen Nähmaschine dient. Diese Steuerprogramme 28 bis 31 sind in der Festplatte des Zentralrechner 16 abgelegt.

Der Zentralrechner 16 ist mit dem einen eigenen Steuerungs-Rechner enthaltenden ersten Bedien-Terminal 7 verbunden. Dieser gesonderte Steuerungs-Rechner im ersten Bedien-Terminal 7 kann völlig unabhängig von der Nähmaschinen-Steuerung 4 mit dem Zentralrechner 16 kommunizieren. Ein Verbindungsaufbau zwischen der Nähmaschine und dem Zentralrechner 16 erfolgt nur über den Steuerungs-Rechner im ersten Bedien-Terminal 7, das heißt die Nähmaschinen-Steuerung 4 muß nicht lauffähig sein. Der Verbindungsaufbau kann sowohl von dem ersten Bedien-Terminal 7 als auch von dem Zentralrechner 16 mit dem Programm 26 eingeleitet werden. Vom Zentralrechner 16 können also über den Steuerungs-Rechner im ersten Bedien-Terminal 7 ein vollständiges Steuerprogramm 28 oder 29 oder 30 oder 31, also ein Betriebsprogramm-Daten-Satz, auf die Steuerung 4 übertragen werden, wenn diese beispielsweise erstmals in Betrieb genommen oder umprogrammiert werden soll, wobei die Bedienung über das dem Zentralrechner 16 zugeordnete zweite Bedien-Terminal 19 oder das dritte Bedien-Terminal 22 erfolgt.

Weiterhin kann - wiederum bei über die Modems 11, 17 hergestellter Verbindung zwischen dem ersten Bedien-Terminal 7 und dem Zentralrechner 16 - vom zweiten Bedien-Terminal 19 die Nähmaschine 2 bedient werden, wobei der Datenfluß zur Nähmaschine 2 über das erste Bedien-Terminal 7 und die Nähmaschinen-Steuerung 4 erfolgt. Der Service-Mann am Zentralrechner 16 kann also alle auf der Nähmaschine 2 durchzuführenden spezifischen Nähoperationen, beispielsweise das Annähen eines Ärmels einschließlich der erforderlichen Raff-Schritte, vom zweiten Bedien-Terminal 19 aus durchführen und mittels des Programmes 26 und dem Programm-Teil 27 auf dem Bildschirm 20 oder 23 sichtbar machen, wie es während des Normalbetriebes der Nähmaschine 2 auf dem Bildschirm 8 des ersten Terminals 7 geschieht. Über das Programm 26 wird durch die Nähmaschine 2 über den Steuerungs-Rechner des ersten Bedien-Terminals 7 und die Steuerung 4 abgefragt, ob die Funktionen, die über das zweite Bedien-Terminal 19 oder das dritte Bedien-Terminal 22 ausgelöst worden sind, tatsächlich an der Nähmaschine 2 auch ausgeführt worden sind. Die Rückmeldung von der Nähmaschine 2 erfolgt über das erste Bedien-Terminal 7 an den Zentralrechner 16 und das Programm 26.

## Patentansprüche

1. Einrichtung zur Daten-Kommunikation zwischen
- einer Nähmaschine (2), die
- - eine programmierbare Nähmaschinen-Steuerung (4) und
- - ein erstes Bedien-Terminal (7)
aufweist und
- einem Zentralrechner (16), der
- - räumlich entfernt zur Nähmaschine (2) angeordnet ist und
- - mit der Nähmaschine (2) über eine Datenfern-Übertragungs-Einrichtung verbindbar ist,
wobei
- die Nähmaschinen-Steuerung (4) mit dem Zentralrechner (16) über einen dem ersten Bedien-Terminal (7) zugeordneten, von der Nähmaschinen-Steuerung (4) gesonderten Steuerungs-Rechner verbunden ist, der zur Eingabe von Betriebsprogramm-Daten und Nähdaten in die Nähmaschinen-Steuerung (4) ausgebildet ist und
- der Zentralrechner (16) mit einem zweiten Bedien-Terminal (19) versehen ist, mittels dessen über den Zentralrechner (16) eine Fernbedienung der Nähmaschinen-Steuerung (4) über den Steuerungs-Rechner des ersten Bedien-Terminal (7) derart durchführbar ist, dass die Nähmaschine (2) über deren Nähmaschinen-Steuerung (4) zu Testzwecken vom Zentralrechner (16) aus bedient werden kann.

2. Einrichtung nach Anspruch 1, **dadurch gekennzeichnet,**
**daß** der zweite Bedien-Terminal (19) mit dem ersten Bedien-Terminal (7) im wesentlich gleich ausgebildet ist.

3. Einrichtung nach Anspruch 1, **dadurch gekennzeichnet,**
**daß** der Zentralrechner (16) mit einem weiteren Bedien-Terminal (22) einschließlich einem Bildschirm (23) und einem Eingabefeld (24) verbunden ist, und daß das Programm (26) einen Programm-Teil (27) zur Sichtbarmachung eines dem ersten Bedien-Terminal (7) im wesentlichen entsprechenden Erscheinungsbildes auf dem Bildschirm (23) aufweist, wobei mit dem Eingabefeld (24) über den Zentralrechner (16) eine Fernbedienung der Nähmaschinen-Steuerung (4) über den Steuerungs-Rechner des ersten Bedien-Terminal (7) durchführbar ist.

4. Einrichtung nach einem der Ansprüche 1 bis 3, **dadurch gekennzeichnet,**
**daß** der Zentralrechner (16) mit einem Programm (26) versehen ist, mittels dessen von der Nähmaschinen-Steuerung (4) ausgelöste Funktionen der Nähmaschine (2) abgefragt und auf einem dem Zentralrechner (16) zugeordneten Bildschirm (20, 23) sichtbar gemacht werden.

5. Einrichtung nach einem der Ansprüche 1 bis 4, **dadurch gekennzeichnet,**
**daß** der erste Bedien-Terminal (7) mit einer Eingabe-Einheit (10) versehen ist, die zur wahlweisen Eingabe von spezifischen Nähdaten oder Betriebsprogramm-Daten mittels einer RAM-Karte oder zur Datenfern-Übertragung mittels eines Steckkarten-Modem (11) ausgestaltet ist.

6. Einrichtung nach einem der Ansprüche 1 bis 5, **dadurch gekennzeichnet,**
**daß** der Zentralrechner (16) mit einem RAM-Karten-Laufwerk (23) zur Eingabe von spezifischen Nähdaten oder Betriebsprogramm-Daten in den Zentralrechner (16) versehen ist.

7. Einrichtung nach einem der Ansprüche 1 bis 6, **dadurch gekennzeichnet,**
**daß** wenigstens eines der Bedien-Terminale (7, 19) durch eine Steckkarte (11) mit der Daten-Fern-Übertragungs-Einrichtung verbindbar ist.

## Claims

1. Device for data communication between
- a sewing machine (2), which comprises
-- a programmable sewing machine controller (4) and
-- a first operator terminal (7)
and
- a central computer (16), which
-- is arranged spatially remotely from the sewing machine (2) and
-- can be connected to the sewing machine (2) via a remote data transmission device,
wherein
- the sewing machine controller (4) is connected to the central computer (16) via a control computer separate from the sewing machine controller (4) and associated with the first operator terminal (7), which control computer is configured for inputting operating program data and sewing data into the sewing machine controller (4) and
- the central computer (16) is provided with a second operator terminal (19) by means of which remote operation of the sewing machine controller (4) via the control computer of the first operator terminal (7) can be carried out via the central computer (16) in such a way that the sewing machine (2) can be operated from the central computer (16) via the sewing machine controller (4) for test purposes.

2. Device according to claim 1, **characterised in that** the second operator terminal (19) is configured substantially identically to the first operator terminal (7).

3. Device according to claim 1, **characterised in that** the central computer (16) is connected to a further operator terminal (22) including a screen (23) and an input field (24), and **in that** the program (26) comprises a program part (27) for displaying on the screen (23) an image substantially corresponding to the first operator terminal (7), wherein remote operation of the sewing machine controller (4) via the control computer of the first operator terminal (7) can be carried out using the input field (24) via the central computer (16).

4. Device according to any one of claims 1 to 3, **characterised in that** the central computer (16) is provided with a program (26) by means of which functions of the sewing machine (2) triggered by the sewing machine controller (4) are tested and displayed on a screen (20, 23) associated with the central computer (16).

5. Device according to any one of claims 1 to 4, **characterised in that** the first operator terminal (7) is provided with an input unit (10) which is configured for optional inputting of specific sewing data or operating program data via a RAM card or for remote data transmission via a modem expansion card (11).

6. Device according to any one of claims 1 to 5, **characterised in that** the central computer (16) is provided with a RAM card drive (23) for inputting specific sewing data or operating program data into the central computer (16).

7. Device according to any one of claims 1 to 6 **characterised in that** at least one of the operator terminals (7, 19) can be connected to the remote data transmission device by an expansion card (11).

## Revendications

1. Dispositif de communication de données entre
- une machine à coudre (2), laquelle présente
- une commande de machine à coudre programmable (4) et
- un premier terminal de commande (7)
et
- un ordinateur central (16), lequel
- est disposé à distance de la machine à coudre (2) et
- peut être relié à la machine à coudre (2) via un dispositif de transmission de données à distance,
moyennant quoi
- la commande de la machine à coudre (4) est reliée à l'ordinateur central (16) via un ordinateur de commande distinct de la commande de la machine à coudre (4) affecté au premier terminal de commande (7), lequel est conçu pour la saisie de données de programme d'exploitation et de données de couture dans la commande de la machine à coudre (4)et
- l'ordinateur central (16) est pourvu d'un deuxième terminal de commande (19), au moyen duquel il est possible de réaliser, via l'ordinateur central (16), une commande à distance de la commande de la machine à coudre (4) via l'ordinateur de commande du premier terminal de commande (7) de manière à pouvoir utiliser la machine à coudre (2) via la commande de la machine à coudre (4) de celle-ci à des fins d'essais à partir de l'ordinateur central (16).

2. Dispositif selon la revendication 1, **caractérisé en ce que** le deuxième terminal de commande (19) avec le premier terminal de commande (7) est essentiellement réalisé de la même manière.

3. Dispositif selon la revendication 1, **caractérisé en ce que** l'ordinateur central (16) est relié à un autre terminal de commande (22), ainsi qu'un écran (23) et un champ de saisie (24), et **en ce que** le programme (26) présente une partie de programme (27) pour rendre visible à l'écran (23) une présentation correspondant essentiellement au premier terminal de commande (7), de sorte qu'il est possible de réaliser, avec le champ de saisie (24), via l'ordinateur central (16), une commande à distance de la commande de la machine à coudre (4) via l'ordinateur de commande du premier terminal de commande (7).

4. Dispositif selon l'une des revendications 1 à 3, **caractérisé en ce que** l'ordinateur central (16) est pourvu d'un programme (26) au moyen duquel des fonctions déclenchées par la commande de la machine à coudre (4) de la machine à coudre (2) sont recherchées et rendues visibles à un écran (20, 23) affecté à l'ordinateur central (16).

5. Dispositif selon l'une des revendications 1 à 4, **caractérisé en ce que** le premier terminal de commande (7) est muni d'une unité de saisie (10), laquelle est réalisée pour la saisie au choix de données de couture ou de données de programme d'exploitation spécifiques à l'aide d'une carte RAM ou pour la transmission de données à distance au moyen d'un modem de carte d'extension (11).

6. Dispositif selon l'une des revendications 1 à 5, **caractérisé en ce que** l'ordinateur central (16) est muni d'un lecteur de carte RAM (23) pour la saisie de données de couture ou de données de programme d'exploitation spécifiques dans l'ordinateur central (16).

7. Dispositif selon l'une des revendications 1 à 6, **caractérisé en ce qu'**au moins un des terminaux de commande (7, 19) peut être relié via une carte d'extension (11) au dispositif de transmission de données à distance.
